# EUROPÄISCHE PATENTANMELDUNG

(11) **EP 4 815 376 A1**
(43) Veröffentlichungstag der Anmeldung: **30.09.2026**
(21) Anmeldenummer: 26166778.6
(22) Anmeldetag: 23.03.2026
(51) Int. Cl.: H04L 12/28, H04L 41/084, H04L 41/08, H04M 11/02, G07C 9/00, H04N 7/18

(54) **HAUSKOMMUNIKATIONSENDGERÄT UND HAUSKOMMUNIKATIONSANLAGE**

(30) Priorität: 24.03.2025 DE 102025111220
(71) Anmelder: Horst Siedle GmbH & Co. KG., 78120 Furtwangen (DE)
(72) Erfinder: Nübling, Michael, 79211 Denzlingen (DE); Fehrenbacher, Thomas, 78132 Hornberg (DE)
(74) Vertreter: Isarpatent

(57) **Zusammenfassung**

Die vorliegende Erfindung betrifft ein Hauskommunikationsendgerät für oder in einer IP-basierten Hauskommunikationsanlage, mit einer Steuereinrichtung, welche dazu ausgebildet ist, die Funktion des Hauskommunikationsendgeräts oder Komponenten davon sowie die IP-basierte Kommunikation des Hauskommunikationsendgeräts mit anderen Hauskommunikationsendgeräten der Hauskommunikationsanlage zu steuern, mit einer Versorgungs-Schnittstelle, über welche das Hauskommunikationsendgerät versorgbar ist, und mit mindestens einer weiteren Schnittstelle, die dazu ausgebildet ist, zur Kommunikation des Hauskommunikationsendgeräts mit anderen Hauskommunikationsendgeräten der Hauskommunikationsanlage Kommunikationsverbindungen bereitzustellen, über die Benutzer mittels Benutzeranwendungen und/oder Administrationsoberflächen auf die Konfigurations- und Verwaltungsfunktionen der Hauskommunikationsanlage zugreifen können, wobei die Schnittstelle ein mit der Steuereinrichtung gekoppeltes WLAN-Modul mit einer WLAN-Schnittstelle aufweist, welches dazu ausgebildet ist, das Hauskommunikationsendgerät mit einem geräteexternen WLAN Netzwerk zu koppeln. Die vorliegende Erfindung betrifft ferner eine Hauskommunikationsanlage mit mindestens einem solchen Hauskommunikationsendgerät.

## Beschreibung

### GEBIET DER ERFINDUNG

Die vorliegende Erfindung betrifft ein Hauskommunikationsendgerät für eine Hauskommunikationsanlage. Die vorliegende Erfindung betrifft ferner eine Hauskommunikationsanlage.

### TECHNISCHER HINTERGRUND

Die vorliegende Erfindung bezieht sich auf das Gebiet der Hauskommunikation als Teil der Hausautomatisierung. Diese Hausautomatisierung befindet sich im Umfeld des intelligenten Wohnens, welches Lösungen im privaten oder geschäftlichen Wohn- und Arbeitsbereich bezeichnet, die auf die speziellen Bedürfnisse der Bewohner von privaten Wohnhäusern, Wohnblocks oder Geschäftshäuser ausgerichtet sind, bei denen Geräte, Systeme und Technologien eingesetzt werden, die mehr Effizienz, Komfort, Wirtschaftlichkeit, Flexibilität und Sicherheit schaffen.

Ein Aspekt der Hausautomatisierung bezieht sich auf die Hauskommunikation mittels entsprechender Hauskommunikationsendgeräte oder (Gegen-)Sprechanlagen. Eine Hauskommunikationsanlage umfasst typischerweise eine Vielzahl von verschiedenen Teilnehmerendgeräten, die miteinander über ein Verbindungsnetzwerk, wie z.B. ein KNX-Bussystem, gekoppelt sind. Man unterscheidet zwischen so genannten Innenstationen, die in einem geschützten Bereich innerhalb des Hauses oder einer entsprechenden Wohnungseinheit angeordnet sind, und so genannte Türstationen oder Außenstationen, die im öffentlichen Bereich vor oder unmittelbar an der Haus- oder Gebäudetür oder als Etagentüren innerhalb eines Gebäudes angebracht sind und über welche Besucher mit Hausbewohnern in kommunikative Verbindung treten können. Diese Hauskommunikationsendgeräte weisen meist eine Klingel, einen Türöffner, eine Gegensprechanlage, eine Kamera und ein Display auf, über welche eine bidirektionale Kommunikation zwischen Besucher und Haus-/Wohnungsbesitzer ermöglicht wird. Derartige Hauskommunikationsanlagen sind allgemein bekannt, so dass darauf nicht näher eingegangen werden muss.

Die vorliegende Erfindung sowie die ihr zugrundeliegende Problematik wird nachfolgend anhand eines als Türstation ausgebildeten Hauskommunikationsendgeräts einer Hauskommunikationsanlage erläutert, ohne die Erfindung darauf zu beschränken. Vielmehr kann die Erfindung auch für eine Innenstation vorteilhaft eingesetzt werden.

Moderne Hauskommunikationsanlagen sowie deren Hauskommunikationsendgeräte sind IP-basiert und damit mit dem Internet koppelbar. Die DE 10 2011 077 013 A1 beschreibt eine solche Hauskommunikationsanlage mit einem IP-basierten Hauskommunikationsnetzwerk.

Bei neuen Bauvorhaben besteht die Problematik, dass meist noch kein Telefonanschluss vorhanden ist, über welchen eine IP-basierte Hauskommunikationsanlage in Betrieb genommen, installiert und/oder konfiguriert werden kann. Besonders problematisch ist dies bei großen Büro-oder Wohngebäuden mit einer Vielzahl von Büro- bzw. Wohneinheiten. Häufig ist dort die Hauskommunikationsanlage bereits eingebaut, jedoch ist das Gebäude noch nicht an ein Telekommunikationsnetz angeschlossen, wodurch die Hauskommunikationsanlage noch nicht installiert und/oder konfiguriert werden kann.

Dies ist ein Zustand, den es zu verbessern gilt.

### ZUSAMMENFASSUNG DER ERFINDUNG

Vor diesem Hintergrund besteht die Aufgabe der vorliegenden Erfindung darin, ein verbessertes Hauskommunikationsendgerät anzugeben.

Erfindungsgemäß wird diese Aufgabe durch ein Hauskommunikationsendgerät mit den Merkmalen des Patentanspruchs 1 und/oder durch eine Hauskommunikationsanlage mit den Merkmalen des Patentanspruches 15 gelöst.

Demgemäß ist vorgesehen:
- Ein Hauskommunikationsendgerät für oder in einer IP-basierten Hauskommunikationsanlage, mit einer Steuereinrichtung, welche dazu ausgebildet ist, die Funktion des Hauskommunikationsendgeräts oder Komponenten davon sowie die IP-basierte Kommunikation des Hauskommunikationsendgeräts mit anderen Hauskommunikationsendgeräten der Hauskommunikationsanlage zu steuern, mit einer Versorgungs-Schnittstelle, über welche das Hauskommunikationsendgerät versorgbar ist, und mit mindestens einer weiteren Schnittstelle, die dazu ausgebildet ist, zur Kommunikation des Hauskommunikationsendgeräts mit anderen Hauskommunikationsendgeräten der Hauskommunikationsanlage Kommunikationsverbindungen bereitzustellen, über die Benutzer mittels Benutzeranwendungen und/oder Administrationsoberflächen auf die Konfigurations- und Verwaltungsfunktionen der Hauskommunikationsanlage zugreifen können, wobei die Schnittstelle ein mit der Steuereinrichtung gekoppeltes WLAN-Modul mit einer WLAN-Schnittstelle aufweist, welches dazu ausgebildet ist, das Hauskommunikationsendgerät mit einem geräteexternen WLAN Netzwerk zu koppeln.
- Eine IP-basierte Hauskommunikationsanlage, mit mindestens einer Innenstation und mit mindestens einer Türstation, wobei zumindest eine Innenstation und/oder Türstation als erfindungsgemäßes Hauskommunikationsendgerät ausgebildet ist, und mit einem IP-basierten Datennetzwerk, über welches die Innenstationen und Türstationen miteinander verbunden sind und über welches sie mit einer zentralen Verwaltungseinheit kommunikativ gekoppelt sind.

Die der vorliegenden Erfindung zugrunde liegende Idee besteht darin, die Versorgungs- und Kommunikationsschnittstelle eines Hauskommunikationsendgerät mit einem zusätzlichen WLAN-Modul zu erweitern.

WLAN - häufig auch WiFi genannt - ist eine Technologie, die Radiowellen bzw. HF-Funkwellen zum Senden und Empfangen von Daten von Verbindungsgeräten verwendet, um einen Internetzugang bereitzustellen. Ein WLAN-Modul ist eine elektronische Komponente, die zusammen mit anderen WLAN-Geräten eine drahtlose Verbindung herstellten. WLAN steht dabei für Wireless Local Area Network und bezeichnet ein drahtloses lokales Netzwerk, über welches den in diesem Netzwerk eingebundenen Geräten und Teilnehmern - vereinfacht gesagt - einen Internetzugang bereitgestellt wird. Das WLAN-Modul ist ein elektronisches Sende-Empfangsgerät, welches als WLAN-Schnittstelle eine Sende-/Empfangsantenne sowie einen Router aufweist, um eine drahtlose WLAN-Datenkommunikation mit anderen mit dem WLAN-Modul gekoppelten WLAN-Geräten, wie etwa andere Hauskommunikationsendgeräte, Smartphones, Laptops, Computer, Server, etc., zu ermöglichen. Dadurch können Benutzer mit hoher Geschwindigkeit auf das WLAN-Netzwerk und zudem auf das Internet zugreifen.

Das erfindungsgemäße WLAN-Modul innerhalb des erfindungsgemäßen Hauskommunikationsgeräts erweitert somit dessen Funktionsumfang. Das Hauskommunikationsgerät weist nun erfindungsgemäß neben der meist ohnehin vorhandenen Versorgungsschnittstelle und Kommunikationsschnittstelle, wie etwa IPbasiertem Datenkabel oder Ethernet-Kabel, nun eine als WLAN-Schnittstelle ausgebildete weitere Kommunikationsschnittstelle auf. Über diese WLAN-Kommunikationsschnittstelle kann bereits eine Datenkommunikation mit dem Hauskommunikationsgerät vorgenommen werden, wenn dieses zum Beispiel noch nicht an das herkömmliche Telefonnetz angeschlossen ist, sodass in diesem Fall die IP-basierte Hauskommunikationsanlage über das WLAN-Modul dennoch installiert, konfiguriert und in Betrieb genommen werden kann.

Vorteilhafte Ausgestaltungen und Weiterbildungen ergeben sich aus den weiteren Unteransprüchen sowie aus der Beschreibung unter Bezugnahme auf die Figuren der Zeichnung.

In einer Weiterbildung der Erfindung weist die Schnittstelle eine Kommunikationsschnittstelle auf, die dazu ausgebildet ist, das Hauskommunikationsendgerät mit einem externen Server und/oder einem Master der Hauskommunikationsanlage zu koppeln. Der externe Server bzw. Master der Hauskommunikationsanlage übernimmt dann zumindest teilweise die Steuerung der Kommunikation zwischen den verschiedenen Hauskommunikationsendgeräten. Die Steuereinrichtung innerhalb des Hauskommunikationsendgeräts steuert dann lediglich geräteinterne Funktionen, wobei dies grundsätzlich auch über den externen Server bzw. Master erfolgen kann.

Gemäß einer besonders bevorzugten Ausgestaltung beinhaltet die Schnittstelle eine Ethernet-Schnittstelle, über welche ein Datenkabel zur Datenkommunikation an das Hauskommunikationsendgerät ankoppelbar ist. Das Datenkabel kann zum Beispiel ein IP-basiertes Datenkabel sein, über welches das IP-basierte Hauskommunikationsendgerät mit dem Internet oder anderen IP-basierten Teilnehmern der Hauskommunikationsanlage koppelbar ist.

In einer besonders bevorzugten Ausgestaltung ist die Ethernet-Schnittstelle ferner dazu ausgebildet ist, das Hauskommunikationsendgerät mit Strom zu versorgen. Die Datenkommunikation kann für diesen Fall, bei dem das Hauskommunikationsendgerät über die Ethernet-Schnittstelle versorgt wird, zusätzlich oder alternativ über das WLAN-Modul erfolgen.

Bevorzugt umfasst die Schnittstelle auch ein Bluetooth-Modul, welches eine Bluetooth-Schnittstelle beinhaltet. Über diese Bluetooth-Schnittstelle kann das Hauskommunikationsendgerät mit anderen Teilnehmern innerhalb einer für den Bluetooth-Standard vorgegebenen Reichweite in Kommunikation treten. Damit ergibt sich gewissermaßen eine Redundanz für den Fall, dass das WLAN-Modul ausgefallen ist oder etwa überlastet ist und deshalb zumindest zeitweise keine Kommunikation über das WLAN-Modul erfolgen kann. Zu diesem Zweck kann das Bluetooth-Modul zum Beispiel mit dem WLAN-Modul gekoppelt sein oder sogar integraler Bestandteil des WLAN-Modul sein.

In einer besonders bevorzugten Ausgestaltung umfasst die Schnittstelle eine Wartungs-Schnittstelle, über welche eine IP-basierte Fernwartung des Hauskommunikationsendgeräts und/oder weiterer mit dem Hauskommunikationsendgerät über die Schnittstelle gekoppelter Teilnehmer der Hauskommunikationsanlage durchführbar ist. Dies hat den besonderen Vorteil, dass für den Fall einer Wartung oder Reparatur der Hauskommunikationsanlage oder einzelner Geräte davon keine Wartung vor Ort erforderlich ist, wodurch die Wartung zum einen meist schneller und einfacher, in jedem Fall aufgrund des Wegfalls von Anfahrt und Abfahrt des Wartungspersonals kostengünstiger ausfällt.

Zusätzlich oder alternativ kann die Schnittstelle auch eine Installations-Schnittstelle aufweisen, über welche eine IP-basierte Installation des Hauskommunikationsendgeräts bzw. entsprechender Teilnehmer der Hauskommunikationsanlage durchführbar ist. In analoger Weise wie für die soeben beschriebene Wartung gestaltet sich auf diese Weise auch die Installation sehr viel einfacher, sowohl für den Installateur als auch den jeweiligen Wohnungs-/Hausbesitzer.

In einer besonders bevorzugten Ausgestaltung ist die Versorgungs-Schnittstelle mit dem Klingelkabel, insbesondere für ein als Türstation ausgebildetes Hauskommunikationsendgerät, verbunden. Auf diese Weise kann das Hauskommunikationsendgerät auch über das Klingelkabel versorgt werden, was beispielweise in solchen Fällen, bei denen das Hauskommunikationsendgerät an einer Stelle ohne Stromversorgung aufgestellt ist , von Vorteil ist.

In einer weiteren bevorzugten Ausgestaltung ist die Steuereinrichtung dazu ausgebildet, zumindest für einige vorgegebene Funktionen als Master der Hauskommunikationsanlage zu fungieren, beispielsweise für die Anbindung einer Software-Applikation an das Hauskommunikationsendgerät. Denkbar wäre auch, dass die Funktion als Master zumindest temporär von einem anderen Hauskommunikationsendgerät auf das erfindungsgemäße Hauskommunikationsendgerät übergeht, um über eine Steuerschnittstelle zumindest einen weiteren Teilnehmer der Hauskommunikationsanlage zu steuern. Dabei kann die Steuereinrichtung permanent den Master bilden oder bedarfsweise, beispielsweise von einem externen Server der Hauskommunikationsanlage, die Master-Rolle zugeteilt bekommen. Dies kann dann der Fall sein, wenn beispielsweise das vorherige, als Master fungierende Hauskommunikationsendgerät überlastet oder ausgefallen ist.

In einer bevorzugten Ausgestaltung weist das Hauskommunikationsendgerät zumindest einen Sensor auf, welcher dazu ausgebildet ist, zumindest einen Geräteparameter innerhalb des Hauskommunikationsendgeräts und/oder zumindest eine Umfeldinformation aus der Umgebung des Hauskommunikationsendgeräts zu erfassen. Die Steuereinrichtung ist dazu ausgebildet, den zumindest einen Sensor zu steuern und die erfassten Geräteparameter bzw. Umfeldinformationen auszuwerten. Der Sensor kann zum Beispiel ein Temperatursensor sein, der dazu ausgebildet ist, die Temperatur im Inneren und/oder im Umfeld des Hauskommunikationsendgeräts zu erfassen. Denkbar wäre auch ein Näherungssensor, Feuchtigkeitssensor, Tageslichtsensor, etc.

Vorzugsweise ist die Steuereinrichtung dazu ausgebildet, das Hauskommunikationsendgerät und/oder Komponenten davon in zumindest drei Betriebsmodi zu betreiben: Ein erster Betriebsmodus bezeichnet einen Normalbetrieb. Ein zweiter Betriebsmodus bezeichnet einen Funktions-reduzierten Betrieb, bei dem die Steuereinrichtung und/oder Komponenten des Hauskommunikationsendgeräts in ihrer Funktion reduziert betrieben werden. Ein dritter Betriebsmodus bezeichnet einen Abschaltbetrieb, bei dem alle Komponenten des Hauskommunikationsendgeräts abgeschaltet werden und die Steuereinrichtung in einem funktionsreduzierten Betrieb arbeitet. Dadurch kann das Hauskommunikationsendgerät bezüglich seiner Funktion optimal an die Bedürfnisse angepasst werden, insbesondere was deren Energieverbrauch angeht. Zudem können diverse Funktionen des Hauskommunikationsendgeräts durch Variation der Betriebsmodi effizient geschützt werden, vor allem im Falle einer erfassten Übertemperatur im Inneren des Hauskommunikationsendgeräts. In diesem Fall könnte zum Beispiel die Taktrate des Mikroprozessors reduziert werden und/oder einzelne Komponenten in ihrer Funktion reduziert oder sogar abgeschaltet werden, wodurch die Temperatur im Gehäuseinneren reduziert wird und wodurch vermieden wird, dass mechanische, elektrische und/oder elektronische Komponenten oder temperatursensitive Komponenten, wie Leiterplatten, Dichtungen, Kamera, Mikrofonmembrane, etc., Schaden nehmen können.

Eine weitere vorteilhafte Ausgestaltung der Erfindung sieht vor, dass die Steuereinrichtung abhängig von durch einen jeweiligen Sensor erfasste Geräteparameter und/oder Umfeldinformationen die unterschiedlichen Betriebsmodi einstellt.

Typischerweise ist die Steuereinrichtung als Steuergerät, vorzugsweise in Form eines Steuergerätemoduls mit Gehäuse, ausgebildet und weist vorzugsweise zumindest einen Mikrocontroller oder Mikroprozessor auf. Ein Mikroprozessor ist ein integrierter Schaltkreis (IC), der aufgrund der Verkleinerung und Integration seiner Schaltungsbestandteile auf einem Halbleitermaterial untergebracht werden kann. Ein Mikroprozessor ist eine programmgesteuerte Einrichtung, der entsprechend der in seinem Speicher enthaltenen Programm-Codes meist digital vorliegende Informationen auswertet und verarbeitet. In der Regel steuert der Mikroprozessor andere elektrische und elektronische Komponenten entsprechend der Vorgaben seines Programms. In einer funktions-reduzierten Version kann die Steuereinrichtung statt eines Mikrocontrollers bzw. Mikroprozessors auch eine Logikschaltung, wie etwa ein FPGA, PLD oder dergleichen, aufweisen.

In einer typischen Ausgestaltung ist das Hauskommunikationsendgerät als Türstation und/oder als Innenstation ausgebildet. Diese Türstation wird häufig auch als Außenstation, Klingelstation bezeichnet.

Besonders bevorzugt ist es, wenn das WLAN-Modul zugleich auch als WLAN-Hotspot für eine der Innenstation zugordnete Wohnung oder dem entsprechenden Gebäude fungiert. Denkbar wäre dies natürlich auch für die Türstation, sofern beabsichtigt ist, dass im öffentlichen Raum zum Beispiel ein öffentliches WLAN-Netz vorhanden sein soll.

In einer vorteilhaften Ausführungsform ist das Gehäuse des Hauskommunikationsendgerätes als ein stabiles, massives und vorzugsweise nach außen hin abgedichtetes Gehäuse, auch im Bereich der Schnittstelle, ausgebildet. Dadurch wird das Einwirken von äußeren Einflüsse, wie Kälte, Feinstaub, Nässe und Feuchtigkeit, möglichst geringgehalten und die Funktionssicherheit vor allem im Bereich der Schnittstelle sichergestellt. Die massive Ausgestaltung des Gehäuses des Hauskommunikationsendgerätes bietet eine verbesserte Vandalismus-Sicherheit, was insbesondere für als Türstationen ausgebildete Hauskommunikationsendgeräte vorteilhaft ist, stellt aber besondere Anforderungen an die Ausgestaltung der Schnittstelle des Hauskommunikationsendgerätes.

In einer vorteilhaften Ausgestaltung der Hauskommunikationsanlage ist je Wohneinheit bzw. Wohnung eines Gebäudes lediglich ein Hauskommunikationsendgerät mit einem WLAN-Modul ausgestattet. Dies ist in der Regel ausreichend, da im Falle einer WLAN-Kommunikation eben dieses Hauskommunikationsendgerät den Master für die Datenkommunikation übernehmen kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild zur Erläuterung des Aufbaus eines erfindungsgemäßen Hauskommunikationsendgeräts;
- Fig. 2: eine schematische Darstellung eines weiteren, detaillierten Ausführungsbeispiels eines erfindungsgemäßen Hauskommunikationsendgeräts;
- Fig. 3: eine schematische Darstellung einer Schnittstelle innerhalb des erfindungsgemäßen Hauskommunikationsendgeräts;
- Fig. 4: ein Blockschaltbild zur Erläuterung einer erfindungsgemäßen Hauskommunikationsendanalage.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

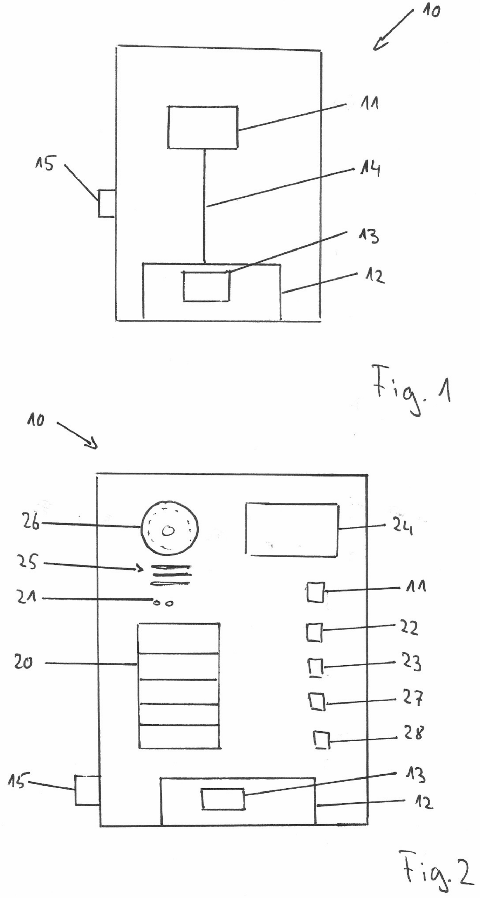

Fig. 1 zeigt ein Blockschaltbild zur Erläuterung des grundsätzlichen Aufbaus eines erfindungsgemäßen Hauskommunikationsendgeräts.

In Fig. 1 ist mit Bezugszeichen 10 das erfindungsgemäße Hauskommunikationsendgerät bezeichnet. Das Hauskommunikationsendgerät 10 kann vorteilhafterweise für eine IP-basierten Hauskommunikationsanlage vorgesehen sein, wobei diese Anwendung nicht zwingend erforderlich ist. Das Hauskommunikationsendgerät 10 umfasst - neben anderen Komponenten und Elementen - eine Steuereinrichtung 11 und eine Schnittstelle 12.

Die Steuereinrichtung 11 der in Fig. 1 nicht gezeigten Hauskommunikationsanlage kann zum Beispiel als Steuergerät ausgebildet sein. Die Steuereinrichtung 11 ist dazu ausgebildet, die Funktion des Hauskommunikationsendgeräts 10 und/oder Komponenten davon sowie die IP-basierte Kommunikation des Hauskommunikationsendgeräts 10 mit anderen Hauskommunikationsendgeräten derselben Hauskommunikationsanlage zu steuern.

Die Schnittstelle 12 dient der Versorgung, Steuerung und Kommunikation des Hauskommunikationsendgeräts 10 mit anderen Teilnehmern der Hauskommunikationsanlage. Die Schnittstelle 12 weist zu diesem Zweck ein über einen internen Bus oder Verbindungsleitung 14 mit der Steuereinrichtung 11 gekoppeltes WLAN-Modul 13 auf. Das WLAN-Modul 13 ist dazu ausgebildet, das Hauskommunikationsendgerät mit einem geräteexternen WLAN Netzwerk zu koppeln. Die Schnittstelle 12 stellt also zumindest eine Kommunikationsverbindung mit anderen Hauskommunikationsendgeräten derselben Hauskommunikationsanlage bereit.

Die Schnittstelle 12 beinhaltet eine Versorgungsschnittstelle 15, über welche das Hauskommunikationsendgerät 10 mit Strom versorgt werden kann. Die Versorgungsschnittstelle 15 kann zum Beispiel ein eigener, zur Stromversorgung vorgesehener Versorgungsanschluss sein. Denkbar wäre aber auch eine Versorgung des Hauskommunikationsendgerät 10 über die Telefonanschlussleitung oder ein Ethernet-Datenkabel. Ebenfalls denkbar und vorteilhaft ist, wenn das Hauskommunikationsendgerät 10 über ein Klingelkabel mit Strom versorgt wird (in Fig. 1 nicht dargestellt).

Fig. 2 zeigt eine schematische Block-Darstellung eines weiteren, detaillierten Ausführungsbeispiels eines erfindungsgemäßen Hauskommunikationsendgeräts.

Das Hauskommunikationsendgerät 10 ist hier als eine Innenstation ausgebildet, die beispielsweise ein Haustelefon, ein Videofreisprechtelefon oder ein virtuelles Videohaustelefon sein kann. Das Hauskommunikationsendgerät 10 weist neben der Steuereinrichtung 11, der Schnittstelle 12 mit WLAN-Modul 13 und Versorgungsschnittstelle 15 diverse Eingabeeinrichtungen auf, die hier z.B. als Klingeltastenfeld 20 oder Tastatur und Mikrofon 21 ausgebildet sind. Ebenfalls kann eine Spracherkennungseinrichtung 22 vorgesehen sein, die zum Beispiel eine über das Mikrofon 21 eingegebene Sprachnachricht erkennt und in eine Textnachricht oder in eine computerlesbare digitale Nachricht umwandelt.

Das erfindungsgemäße Hauskommunikationsendgerät 10 weist ferner einen hier lediglich schematisch angedeuteten Speicher 23 auf, in dem beispielsweise eine Vorauswahl von Nachrichten, Gerätekonfigurationen und -parameter, Programmcodes für die als Mikroprozessor ausgebildete Steuereinrichtung 11, etc. ablegbar ist. Schließlich weist das erfindungsgemäße Hauskommunikationsendgerät 10 weitere bekannte Funktionen und Einrichtungen auf, wie beispielsweise ein Display 24 zur Anzeige von Informationen, Nachrichten und/oder Video-Sequenzen, wie etwa Echtzeit-Bilder einer Kamera eines anderen Hauskommunikationsendgeräts, einen Lautsprecher 25 zur Ausgabe von Sprachnachrichten und eine Video-Kamera 26. Sofern das Hauskommunikationsendgerät 10 als portables, mobiles Endgerät ausgebildet ist, weist dieses ferner eine eigene, lokale Energieversorgung 27 auf.

Das Hauskommunikationsendgerät 10 umfasst ferner ein oder mehrere Sensoren 28, über welche das Hauskommunikationsendgerät 10 Umfeldinformationen aus der Umgebung des Hauskommunikationsendgeräts 10 erfassen kann, wie etwa die Temperatur in oder außerhalb des Hauskommunikationsendgeräts 10. Denkbar wäre auch ein Näherungssensor für eine sich nähernde Person, ein Feuchtigkeitssensor, ein Tageslichtsensor, etc. Ferner kann auch ein weiterer Sensor vorgesehen sein, um Geräteparameter innerhalb des Hauskommunikationsendgeräts zu erfassen, wie etwa Leistungsdaten, Lebensdauer von Komponenten des Hauskommunikationsendgeräts 10, etc.

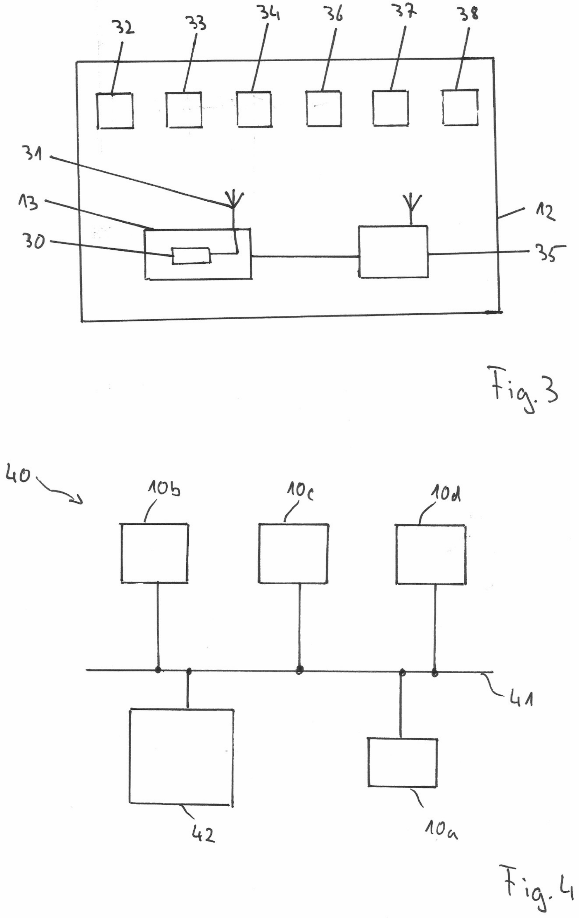

Fig. 3 zeigt eine schematische Darstellung einer Schnittstelle des erfindungsgemäßen Hauskommunikationsendgeräts.

Das WLAN-Modul 13 als Bestandteil der Schnittstelle 12 kann einen Router 30 aufweisen, der einen Transceiver beinhaltet und mit einer Sende-/Empfangsantenne 31 gekoppelt ist. Das WLAN-Modul 13 kann darüber hinaus auch von der Schnittstelle 12 getrennt sein.

Die Schnittstelle 12 weist zumindest eine Daten- und Kommunikationsschnittstelle 32 auf. Mittels der Daten- und Kommunikationsschnittstelle 32 lässt sich das Hauskommunikationsendgerät 10 mit einem externen Server und/oder einem Master der Hauskommunikationsanlage koppeln, um zumindest teilweise von diesen gesteuert zu werden.

Ferner kann auch eine separate Steuerschnittstelle 33 vorgesehen sein. Über die Steuerschnittstelle 33 kann das Hauskommunikationsendgerät 10 von einem externen Server und/oder Master der Hauskommunikationsanlage gesteuert werden. Zusätzlich oder alternativ kann das Hauskommunikationsendgerät 10 über die Steuerschnittstelle 33 auch andere Hauskommunikationsendgerät steuern.

Die Schnittstelle 12 umfasst ferner einen Ethernet-Anschluss 34, um zum Beispiel ein Ethernet-Datenkabel zur Datenkommunikation anzuschließen. Dieses Ethernet-Datenkabel kann auch dazu vorgesehen sein, das Hauskommunikationsendgerät 10 mit Strom zu versorgen.

Das in Fig. 3 gezeigte Hauskommunikationsendgerät 10 weist die Schnittstelle 12 neben dem WLAN-Modul 13 ferner ein Bluetooth-Modul 35 mit Bluetooth-Schnittstelle und Sende-Empfangsantenne zur Nahbereichskommunikation auf. Vorzugsweise ist das Bluetooth-Modul 35 mit dem WLAN-Modul 13 gekoppelt. Besonders bevorzugt ist das Bluetooth-Modul 35 Bestandteil des WLAN-Moduls 13, das heißt es gibt ein einziges Modul, das sowohl eine WLAN-Schnittstelle als auch eine Bluetooth-Schnittstelle beinhaltet.

Eine spezielle Ausgestaltung sieht eine Wartungs- und/oder Installations-Schnittstelle 36, 37 innerhalb der Schnittstelle 12 vor. Über die Wartungs- und/oder Installations-Schnittstelle 36, 37 lässt sich eine IP-basierte Fernwartung bzw. Installation des Hauskommunikationsendgeräts 10 und/oder weiterer mit dem Hauskommunikationsendgerät über die Schnittstelle gekoppelter Teilnehmer der Hauskommunikationsanlage durchführen. Die Wartungs- und/oder Installations-Schnittstellen 36, 37 können auch über die Kommunikationsschnittstelle 32 realisiert werden.

Schließlich kann die Schnittstelle 12 auch einen Anschluss 38 für ein Klingelkabel aufweisen, insbesondere wenn das Hauskommunikationsendgerät 10 als Türstation ausgebildet ist. Mittels diesem Klingelkabel kann das Hauskommunikationsendgerät 10 in einer Ausgestaltung ebenfalls mit Strom versorgt werden.

Fig. 4 zeigt ein Blockschaltbild einer erfindungsgemäßen Hauskommunikationsanlage.

Die IP-basierte Hauskommunikationsanlage 40 weist eine Vielzahl von Teilnehmerendgeräten 10a-10d auf, die zum Beispiel als Türstation 10a und Innenstationen 10b-10d ausgebildet sind. Die Teilnehmerendgeräte 10a-10d können entsprechend den in den Fig. 1 und 2 dargestellten Hauskommunikationsendgeräten 10 ausgebildet sein.

Die Teilnehmerendgeräte 10a-10d sind direkt oder mittels Switches oder Router oder über andere Teilnehmerendgeräte mit einem Busnetzwerk 41 der Hauskommunikationsanlage 40 gekoppelt. Die Hauskommunikationsanlage 40 weist ferner eine zentrale Steuereinrichtung 42 auf, die ebenfalls über das Busnetzwerk 41 mit den verschiedenen Teilnehmerendgeräten 10a-10d gekoppelt ist. Das Busnetzwerk 41 kann durch verschiedene Router, Switches und Kommunikationsverbindungen gebildet werden. Die Kommunikations-Verbindungen zwischen den Teilnehmerendgeräten 10a-10d und den Routern sowie die Verbindungen zwischen den verschiedenen Routern können als drahtgebundene oder drahtlose Kommunikationsverbindungen ausgebildet sein. Denkbar wäre ein WLAN-, LAN-, MAN-, WAN-oder KNX-Netzwerk oder etwa auch ein gemischtes WLAN/LAN-Netzwerk. Darüber hinaus wären auch andere Netzwerktopologien einsetzbar.

Es ist auch denkbar, dass keine zentrale Steuereinrichtung 42 vorhanden ist. In diesem Fall kann zum Beispiel ein oder mehrere Hauskommunikationsendgeräte 10a-10d die Hauskommunikationsanlage 40 steuern.

Im Falle einer Hauskommunikationsanlage 40 können verschiedene Teilnehmerendgeräte 10a-10d einer so genannten Teilnehmergruppe oder Cluster zugeordnet sein (in Fig. 4 nicht gezeigt). Die Teilnehmerendgeräte 10a-10d eines jeweiligen Clusters sind über entsprechende Kommunikationsverbindungen direkt oder indirekt, beispielsweise über weitere Router oder andere Teilnehmerendgeräte, mit einem diesem Cluster zugeordneten Router verbunden. Ein solches Cluster kann beispielsweise eine Einheit in einem Gebäude sein, beispielsweise eine abtrennbare Wohnung, ein Büro, der Empfang eines Gebäudes oder einer Etage, und dergleichen. Denkbar wäre auch, dass als Cluster einzelne Räume oder Untergruppen innerhalb eines Raums, einer Wohneinheit oder eines Büros vorgesehen sind.

Darüber hinaus kann eines der Cluster dafür vorgesehen sein, die zentrale Steuereinrichtung, beispielsweise den Server des Busnetzwerks 41, aufzunehmen. Ein weiteres Cluster kann beispielsweise der Eingangsbereich mit der Türsprechanlage 10a samt der darin integral angeordneten Türkamera sein. Sowohl die zentrale Steuereinrichtung 42 als auch die Türsprechanlage 10a können dabei zugleich auch als Teilnehmerendgeräte fungieren.

Als Teilnehmerendgeräte 12 können beispielsweise vorgesehen sein:
- ein Haustelefon mit oder ohne Display;
- ein Etagenruftaster;
- eine Etagentürsprechanlage mit oder ohne Videokamera; ein Videofreisprechtelefon;
- ein virtuelles Videohaustelefon;
- ein Türcontroller;
- eine analoge Videokamera;
- eine Türstation;
- eine Türkamera;
- ein PC oder Laptop;
- ein Smartphone;
- ein elektronisches Whiteboard.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 10: Hauskommunikationsendgerät
- 10a: Hauskommunikationsendgerät, Teilnehmerendgerät, Türstationen
- 10b-10d: Hauskommunikationsendgerät, Teilnehmerendgeräte, Innenstation
- 11: Steuereinrichtung
- 12: Schnittstelle
- 13: WLAN-Modul
- 14: interner Bus, Verbindungsleitung
- 15: Versorgungsschnittstelle

- 20: Tastatur
- 21: Mikrofon
- 23: Speicher
- 24: Display
- 25: Lautsprecher
- 26: Video-Kamera
- 27: lokale Energieversorgung
- 28: Sensoren

- 30: Router
- 31: Sende-/Empfangsantenne
- 32: Daten- und Kommunikationsschnittstelle
- 33: Steuerschnittstelle
- 34: Ethernet-Anschluss
- 35: Bluetooth-Modul
- 36: Wartungs-Schnittstelle
- 37: Installations-Schnittstelle
- 38: Anschluss für ein Klingelkabel

- 40: Hauskommunikationsanlage
- 41: Busnetzwerk
- 42: zentrale Steuereinrichtung

## Patentansprüche

1. Hauskommunikationsendgerät für oder in einer IP-basierten Hauskommunikationsanlage,
mit einer Steuereinrichtung, welche dazu ausgebildet ist, die Funktion des Hauskommunikationsendgeräts oder Komponenten davon sowie die IP-basierte Kommunikation des Hauskommunikationsendgeräts mit anderen Hauskommunikationsendgeräten der Hauskommunikationsanlage zu steuern,
mit einer Versorgungs-Schnittstelle, über welche das Hauskommunikationsendgerät versorgbar ist,
mit mindestens einer weiteren Schnittstelle, die dazu ausgebildet ist, zur Kommunikation des Hauskommunikationsendgeräts mit anderen Hauskommunikationsendgeräten der Hauskommunikationsanlage Kommunikationsverbindungen bereitzustellen, über die Benutzer mittels Benutzeranwendungen und/oder Administrationsoberflächen auf die Konfigurations- und Verwaltungsfunktionen der Hauskommunikationsanlage zugreifen können, wobei die Schnittstelle ein mit der Steuereinrichtung gekoppeltes WLAN-Modul aufweist, welches dazu ausgebildet ist, das Hauskommunikationsendgerät mit einem geräteexternen WLAN Netzwerk zu koppeln.

2. Hauskommunikationsendgerät nach Anspruch 1,
**dadurch gekennzeichnet,**
**dass** die Schnittstelle eine Kommunikationsschnittstelle aufweist, die dazu ausgebildet ist, das Hauskommunikationsendgerät mit einem externen Server und/oder einem Master der Hauskommunikationsanlage zu koppeln.

3. Hauskommunikationsendgerät nach einem der vorstehenden Ansprüche,
**dadurch gekennzeichnet,**
**dass** die Schnittstelle eine Ethernet-Schnittstelle beinhaltet, über welche ein Datenkabel, insbesondere ein IP-basiertes Datenkabel, zur Datenkommunikation an das Hauskommunikationsendgerät ankoppelbar ist.

4. Hauskommunikationsendgerät nach Anspruch 3,
**dadurch gekennzeichnet,**
**dass** die Ethernet-Schnittstelle dazu ausgebildet ist, das Hauskommunikationsendgerät mit Strom zu versorgen, wobei die Datenkommunikation für den Fall, dass das Hauskommunikationsendgerät über die Ethernet-Schnittstelle versorgt wird, über das WLAN-Modul erfolgt.

5. Hauskommunikationsendgerät nach einem der vorstehenden Ansprüche,
**dadurch gekennzeichnet,**
**dass** die Schnittstelle ein Bluetooth-Modul mit einer Bluetooth-Schnittstelle beinhaltet, welche insbesondere mit dem WLAN-Modul gekoppelt ist.

6. Hauskommunikationsendgerät nach einem der vorstehenden Ansprüche,
**dadurch gekennzeichnet,**
**dass** die Schnittstelle eine Wartungs- und/oder Installations-Schnittstelle aufweist, über welche eine IP-basierte Fernwartung bzw. Installation des Hauskommunikationsendgeräts und/oder weiterer mit dem Hauskommunikationsendgerät über die Schnittstelle gekoppelter Teilnehmer der Hauskommunikationsanlage durchführbar ist.

7. Hauskommunikationsendgerät nach einem der vorstehenden Ansprüche,
**dadurch gekennzeichnet,**
**dass** die Versorgungs-Schnittstelle mit einem Klingelkabel verbunden ist.

8. Hauskommunikationsendgerät nach einem der vorstehenden Ansprüche,
**dadurch gekennzeichnet,**
**dass** die Steuereinrichtung dazu ausgebildet ist, zumindest für einige vorgegebene Funktionen als Master der Hauskommunikationsanlage zu fungieren und/oder über die Schnittstelle zumindest einen weiteren Teilnehmer der Hauskommunikationsanlage zu steuern.

9. Hauskommunikationsendgerät nach einem der vorstehenden Ansprüche,
**dadurch gekennzeichnet,**
**dass** das Hauskommunikationsendgerät zumindest einen Sensor aufweist, welcher dazu ausgebildet ist, zumindest einen Geräteparameter innerhalb des Hauskommunikationsendgeräts und/oder zumindest eine Umfeldinformation der Umgebung des Hauskommunikationsendgeräts zu erfassen, wobei die Steuereinrichtung dazu ausgebildet ist, den zumindest einen Sensor zu steuern und die erfassten Geräteparameter bzw. Umfeldinformationen auszuwerten.

10. Hauskommunikationsendgerät nach einem der vorstehenden Ansprüche,
**dadurch gekennzeichnet,**
**dass** die Steuereinrichtung dazu ausgebildet ist, das Hauskommunikationsendgerät und/oder Komponenten davon in zumindest drei Betriebsmodi zu betreiben, wobei ein erster Betriebsmodus einen Normalbetrieb bezeichnet, wobei ein zweiter Betriebsmodus einen Funktions-reduzierten Betrieb bezeichnet und wobei ein dritter Betriebsmodus einen Abschaltbetrieb bezeichnet.

11. Hauskommunikationsendgerät nach Anspruch 10,
**dadurch gekennzeichnet,**
**dass** die Steuereinrichtung dazu ausgebildet ist, die unterschiedlichen Betriebsmodi abhängig von durch zumindest einen Sensor erfasste Geräteparameter und/oder Umfeldinformationen einzustellen.

12. Hauskommunikationsendgerät nach einem der vorstehenden Ansprüche,
**dadurch gekennzeichnet,**
**dass** die Steuereinrichtung als Steuergerät ausgebildet ist und zumindest einen Mikrocontroller oder Mikroprozessor aufweist.

13. Hauskommunikationsendgerät nach einem der vorstehenden Ansprüche,
**dadurch gekennzeichnet,**
**dass** das Hauskommunikationsendgerät als Türstation und/oder als Innenstation ausgebildet ist, wobei das WLAN-Modul insbesondere als WLAN-Hotspot für eine der Innenstation zugordnete Wohnung oder Gebäude fungiert.

14. IP-basierte Hauskommunikationsanlage,
mit mindestens einer Innenstation und mit mindestens einer Türstation, wobei zumindest eine Innenstation und/oder Türstation als Hauskommunikationsendgerät nach einem der vorherigen Ansprüche ausgebildet ist,
mit einem IP-basierten Datennetzwerk, über welches die Innenstationen und Türstationen miteinander verbunden sind und über welches sie mit einer zentralen Verwaltungseinheit kommunikativ gekoppelt sind.

15. Hauskommunikationsanlage nach Anspruch 14,
**dadurch gekennzeichnet,**
**dass** je Wohneinheit eines Gebäudes lediglich ein Hauskommunikationsendgerät mit einem WLAN-Modul ausgestattet ist.
